# EUROPEAN PATENT SPECIFICATION

(11) **EP 3 532 834 B1**
(45) Date of publication and mention of the grant of the patent: **03.07.2024**
(21) Application number: 17811700.8
(22) Date of filing: 24.10.2017
(51) Int. Cl.: G01N 30/30, B01D 15/40, B01D 15/16

(54) **EXPANSION REGULATION IN CARBON DIOXIDE BASED CHROMATOGRAPHIC SYSTEMS**
EXPANSIONSREGELUNG BEI KOHLENDIOXIDBASIERTEN CHROMATOGRAFIESYSTEMEN
RÉGULATION DE L'EXPANSION DANS DES SYSTÈMES CHROMATOGRAPHIQUES À BASE DE DIOXYDE DE CARBONE

(30) Priority: 25.10.2016 US 201662412448 P
(43) Date of publication of application: 04.09.2019
(73) Proprietor: Waters Technologies Corporation, Milford, MA 01757 (US)
(72) Inventor: SHREVE, Joshua A., Milford, MA 01757 (US)
(74) Representative: Forresters IP LLP
(86) International application number: PCT/IB2017/056602
(87) International publication number: WO 2018/078531

(56) References cited:
- WO-A1-2016/147379
- US-A1- 2016 018 366

## Description

### Related Applications

This application claims priority to U.S. Provisional Patent Application Serial No. 62/412,448 entitled "Expansion Regulation in Carbon Dioxide Based Chromatographic Systems," filed on October 25, 2016.

### Field of the Technology

The present disclosure relates to an apparatus, and related methodology, for the regulation of carbon dioxide expansion in a carbon dioxide based chromatographic system. In particular, the present disclosure relates to minimizing or eliminating the deleterious effects of carbon dioxide expansion on the solvent, the analyte(s) of interest, the separation, the detection of the analyte(s) of interest, and other related aspects in a carbon dioxide based chromatographic system.

### Background

Carbon dioxide based chromatographic systems use carbon dioxide as a component of the mobile phase. An example of a carbon dioxide based chromatography system is a supercritical fluid chromatography system designed to use CO₂ in the mobile phase flow stream. In some systems, the carbon dioxide based mobile phase is delivered from the pump, or pumps, and carried through the separation column as a liquid. After exiting the separation column, the mobile phase and the analyte(s) of interest are directed to a detector for analysis where the analyte(s) of interest is identified, quantified or both. Prior to entering or after exiting the detector the carbon dioxide may undergo a deliberate phase change, e.g., from liquid to gas. This phase change absorbs energy and can abruptly drop the temperature of the mobile phase, as well as the temperature experienced by any analyte(s) of interest. This phase change and temperature drop can have negative impacts on the system.

Currently, the temperature drop associated with the phase change is managed by the use of a back pressure regulator heater. The heater is typically located downstream of the separation column and upstream of the regulator. The heater is usually located in a position that heats the mobile phase after it has undergone the phase change. Standard practice is to set the back pressure regulator heater, or similar heating device, to a constant temperature that is sufficient to prevent the mobile phase, or any components thereof, from freezing as a result of the temperature drop. Standard practice, however, ignores the effect(s) of insufficient or excess heat being delivered to the system.

A prior art arrangement is known from WO 2016/147379, which discloses a supercritical fluid device provided with a back pressure regulator arranged downstream of a separation/extraction section, wherein a pipe is connected to an outlet side of the back pressure regulator, and the pipe is provided with a heating unit.

US 2016/018366 A1 discloses a thermally modulated variable restrictor coupled downstream of the separation column in a supercritical fluid chromatograph.

### Summary

The present disclosure relates to the regulation of carbon dioxide expansion in a carbon dioxide based chromatographic system. In particular, the present disclosure relates to the regulation of the carbon dioxide expansion and dynamic control of the temperature of the mobile phase, as well as for any analyte(s) of interest. The invention is defined in the appended claims.

The present invention relates to a chromatographic expansion regulation system comprising a chromatographic column having an inlet and an outlet, a mobile phase including a compressed room temperature gas in substantially liquid form flowing through the column, a temperature sensor downstream of the outlet and located in an area where a substantial portion of the mobile phase expands from liquid form to gas form, wherein the sensor is capable of measuring the temperature of the expanded mobile phase, a heater in thermal communication with the column, capable of adjusting the column temperature; and a temperature controller in signal communication with the sensor and the heater, wherein the controller is capable of receiving the temperature measurement from the sensor, comparing the temperature measurement with a desired temperature in the expansion area or expanded mobile phase, and sending a signal to the heater to adjust the column temperature to obtain the desired temperature.

In another embodiment, the present disclosure relates to a method of reducing or preventing crystallization or freezing of a mobile phase upon expansion. The method includes the steps of measuring an expansion area temperature of the mobile phase in an area where a substantial portion of the mobile phase expands from a liquid form to a gas form, comparing the expansion area temperature with a desired temperature in the expansion area or expanded mobile phase, and adjusting the temperature of the mobile phase at a chromatography column to obtain the desired temperature.

In another embodiment, the present disclosure relates to a method of reducing or preventing degradation of an analyte contained in a mobile phase upon expansion. The method includes the steps of measuring an expansion area temperature of the mobile phase in an area where a substantial portion of the mobile phase expands from a liquid form to a gas form, comparing the expansion area temperature with a desired temperature in the expansion area or expanded mobile phase, and adjusting the temperature of the mobile phase at a chromatography column to obtain the desired temperature.

In another embodiment, the present disclosure relates to a method of reducing or preventing precipitation of an analyte in a mobile phase upon expansion. The method includes the steps of measuring an expansion area temperature of the mobile phase in an area where a substantial portion of the mobile phase expands from a liquid form to a gas form, comparing the expansion area temperature with a desired temperature in the expansion area or expanded mobile phase, and adjusting the temperature of the mobile phase at a chromatography column to obtain the desired temperature.

The embodiments of the present disclosure are applicable to preparative, analytical and micro-analytical chromatographic systems and can include one or more of the following features. These systems can employ a mobile phase comprising only a compressed room temperature gas in liquid form (e.g., carbon dioxide) or can include modifiers, such as methanol. Because of the dynamic control associated with the present disclosure, embodiments of the present disclosure are also applicable to separations having mobile phase conditions or separation conditions that change (e.g., mobile phase gradient, column temperature gradient, column pressure gradient, etc.) during the separation. The carbon dioxide based chromatographic systems can also include a dedicated gas/liquid separator (GLS) to assist with the mobile phase expansion, the extraction of the liquid component of the mixture, or both. The temperature sensor can also be incorporated in the body of the GLS or in direct fluid communication therewith. The embodiments of the present disclosure are capable to controlling the temperature of the expansion area to specific ranges, such as 0°C and 5°C. Further, some embodiments feature continuous or substantially continuous monitoring and adjusting of the temperature. Some embodiments feature feedback/overshoot control, such that temperature can be regulated and controlled dynamically throughout a separation, including a separation with gradient operating conditions.

Current systems use dynamic temperature control with no feedback across the phase change, e.g., no monitoring or adjusting of the temperature based on conditions or events related to phase change. Advantages of the present disclosure include dynamic control of the temperature in the mobile phase expansion area. The negative impacts on the system, such as crystallization, freezing, degradation, or precipitation of the mobile phase or analyte(s) of interest can be avoided. In particular, the present disclosure can minimize the effects of overheating the solvent which can degrade samples or analyte(s) of interest, can maintain a desired outlet temperature to prevent sample fallout from low solubility of an analyte(s) of interest or can maintain a desired outlet temperature to prevent crystallization or freezing of the solvent, or any portion thereof.

### Brief Description of the Drawings

The foregoing and other features and advantages provided by the present disclosure will be more fully understood from the following description of exemplary embodiments when read together with the accompanying drawings.
Figure 1 shows one embodiment of the chromatographic expansion regulation system having a heater, an expansion area where the phase change occurs, and a sensor. The temperature at the sensor provides feedback to a controller (not shown) to control and adjust (i.e. regulate) the heater, and thus to control and adjust (i.e., regulate) the temperature of the flow undergoing phase change. One benefit of this embodiment is the minimal temperatures experienced by the sample (e.g., analyte of interest) in the system.
Figure 2 shows another embodiment of the chromatographic expansion regulation system having a gas/liquid separator to effectuate the expansion. The GLS is also equipped with a temperature sensor connected to the temperature feedback system.
Figure 3 shows another embodiment of the chromatographic expansion regulation system having a dual heater configuration.

### Detailed Description

The present disclosure relates to the regulation of carbon dioxide expansion in a carbon dioxide based chromatographic system. In particular, the present disclosure relates to minimizing or eliminating the deleterious effects of carbon dioxide expansion on the solvent, the analyte(s) of interest, the separation, the detection of the analyte(s) of interest, and other related aspects in a carbon dioxide based chromatographic system.

In one embodiment, the present disclosure relates to a chromatographic expansion regulation system comprising a chromatographic column having an inlet and an outlet, a mobile phase including a compressed room temperature gas in substantially liquid form (e.g., at least about 85% in liquid form, at least about 90% in liquid form) flowing through the column, a temperature sensor downstream of the outlet and located in an area where a substantial portion of the mobile phase expands from liquid form to gas form, wherein the sensor is capable of measuring the temperature in the expansion area, a heater in thermal communication with the column or the column and the expansion area capable of adjusting the column temperature or the column temperature and the expansion area temperature; and a temperature controller in signal communication with the sensor and the heater, wherein the controller is capable of receiving the temperature measurement from the sensor, comparing the temperature measurement with a desired temperature in the expansion area, and sending a signal to the heater to adjust the column temperature/expansion area temperature to obtain the desired temperature in the expansion area. The mobile phase can also be supercritical. For example, the mobile phase can be supercritical in the column where the conditions are above the critical temperature.

The chromatographic regulation system can be applied to any chromatographic system that uses a solvent and/or analyte of interest which undergoes a phase change. The phase change can be an expansion from liquid or supercritical to gas form. Upon expansion, a temperature drop occurs wherein the system of the present disclosure dynamically controls this temperature change through regulation. In an example that is not part of the claimed subject-matter, the phase change can also be a compression from gas to liquid or supercritical form. Upon compression, a temperature rise occurs wherein the system of the present disclosure dynamically controls this temperature change. For examples (which are not part of the claimed subject-matter) involving compression regulation systems, the temperature controlling device can be a chiller (e.g., column chiller). Embodiments herein dynamically control temperature after or during a phase change event. As a result of the devices, systems and methods described herein, temperature change of the solvent and/or analyte of interest is monitored and dynamically controlled to minimize adverse effects of expansion/compression of the mobile phase.

The embodiments of the present disclosure are applicable to preparative, analytical and micro-analytical chromatographic systems. The chromatographic column can be any column for use in any of these systems having an inlet and an outlet. In some embodiments, mobile phase gradient conditions are used.

The solvent, or mobile phase, can include any compressed room temperature gas that can be used in liquid or supercritical form during at least a portion of a chromatographic separation (e.g., carbon dioxide). The mobile phase can consist solely of the compressed room temperature gas or can have co-solvents or modifiers. The mobile phase can also have two or more compressible room temperature gases and/or one or more modifiers. In some embodiments, the mobile phase is 100% carbon dioxide. In other embodiments, the mobile phase is carbon dioxide with one or more modifiers, such as methanol.

Without wishing to be bound to theory, it is believed that the addition of co-solvents to the mobile phase reduces phase change and other set point temperatures. For example, when controlling post phase change conditions, the addition of a co-solvent reduces the temperature setpoint. Expansion of the mobile phase to a gas requires a known amount of energy. As thermal energy is typically the only available source, the expansion drops the temperature of the gas/fluid. The added thermal mass of the co-solvent(s) hold additional thermal energy that is then absorbed by the expanding carbon dioxide. The energy required is typically determined by the difference in enthalpy of the carbon dioxide at the heated condition before expansion and the desired condition after expansion. The co-solvent is not part of the expansion cooling load, but it can store thermal energy to transfer to the carbon dioxide during expansion. This extra energy from the co-solvent can change or reduce the liquid temperature.

The temperature sensor can be located downstream of the column outlet and in, near or adjacent to the area where a substantial portion of the expansion from liquid to gas occurs. The temperature sensor can include any traditional temperature sensor used in chromatographic systems to measure the temperature of a mobile phase in either liquid, gas, or mixed form. The sensor can be capable of measuring the temperature in, near or adjacent to the expansion area. For example, the temperature sensor can be a thermocouple, a thermistor or a resistance temperature detector (RTD). During operation of a carbon dioxide based chromatographic system the mobile phase can experience unintended phase change (e.g., liquid to gas). These unintended phase change occurrences are typically short in duration and not widespread throughout the system, and do not typically involve a substantial portion of the mobile phase.

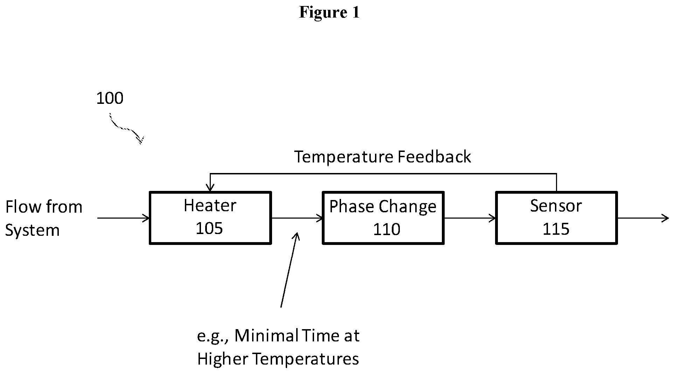

Figure 1 shows one embodiment of the chromatographic expansion regulation system (100) having a heater (105), an expansion area (110) where the phase change occurs, and a sensor (115). The temperature at the sensor is feedback through a controller (not shown) to control and adjust the heater, and thus to control and adjust the temperature of the flow undergoing phase change. One benefit of this embodiment is the minimal temperatures experienced by the sample (e.g., analyte of interest) in the system. Excess heat delivered to the system can be avoided or minimized to prevent degradation of the sample associated with such excess heat.

The temperature sensor can be placed in an area at or just downstream of where the mobile phase (e.g., carbon dioxide) phase change occurs. The placement of the sensor can also be affected by the flow rate. The slower the flow rate, the closer the sensor can be placed to the phase change location. The present disclosure can be used with chromatographic systems that also use a gas/liquid separator (GLS). A GLS is a device designed to effectively and efficiently control the expansion of the solvent or mobile phase, and separate the gas portion from the liquid portion with minimal effects on the separated analyte(s) of interest. In one embodiment, the expansion area (110) is inside the GLS. In another embodiment, the temperature sensor (115) can be incorporated into, or placed at or inside, the GLS.

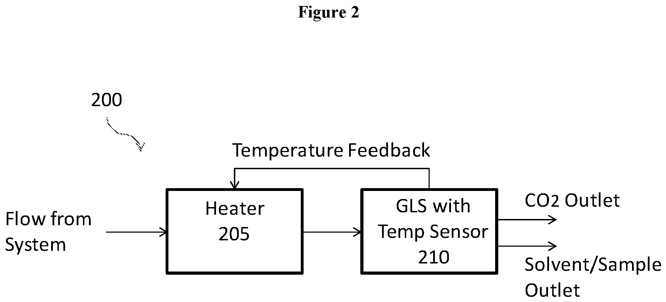

Figure 2 shows another embodiment of the chromatographic expansion regulation system (200) having a GLS to effectuate the expansion. The mobile phase flows from the column and passes by or through the heater. The heater (205) is upstream of the GLS (210). Mobile phase expansion occurs in the GLS. The GLS is also equipped with a temperature sensor that is in signal communication with the temperature feedback system which controls the upstream heater. The temperature and conditions in the GLS are monitored (e.g., internal temperature) and the heater is adjusted as necessary.

The heater can include any mobile phase heater, column heater or similar type heater used in chromatographic systems. For example, the heater can be a cartridge, a flexible circuit or a coil. The heater is in thermal communication with at least the column, it may be in thermal communication with the column and the expansion area, such that the heater can effectively transfer heat energy to these devices or areas and can adjust the temperature in the column, or both the column and expansion area. In one embodiment, the heater is located near the column outlet. In another embodiment, the heater is located adjacent to and upstream of the expansion area. The efficiency of heating is increased by heating the liquid phase. However, in some embodiments, the heater is located in or near the expansion area. Heat can be added in an amount sufficient to only heat to maintain the desired temperature after the phase change, and avoid heating the liquid phase.

In some embodiments, the heater can be a controlled heating device having an additional sensor within the heater. The second control point can add stability and provide control of the maximum temperature in the heating system.

The temperature controller can include any controller system used in chromatographic systems. The controller can be in signal communication with the sensor, the heater or both. For example, the controller can be a P controller, a PI controller, a PID controller, a Fuzzy Logic controller, or combinations thereof. The controller can also be capable of receiving the temperature measurement from the sensor, comparing the temperature measurement with a desired temperature in the expansion area, and sending a signal to the heater to adjust the column temperature or both the column and expansion area temperature to obtain the desired temperature in the expansion area.

The controller can also have a set of instructions utilized by the controller, wherein the controller is capable of receiving the temperature value from the sensor, comparing it against a desired temperature or temperature range, and adjusting at least one system component or parameter (e.g., the upstream heater) to achieve the desired temperature or temperature range in either solvent or mobile phase flowing into the expansion area, or the temperature or temperature range in the expansion area. The controller can also have a set of instructions utilized by the controller to handle temperature overshoot. Further the controller can control ramp rate of the heater to minimize the deleterious effects of the phase change event(s) on the separation and/or analysis.

The temperature measurement recorded by the sensor and received by the controller can vary over the course of the separation, assuming only static control, or no control, of such temperature. For example, in a gradient mobile phase separation in which the concentration of modifier varies over the course of the separation the temperature in the expansion area may vary over time. Similarly, in a temperature gradient separation in which the temperature of the column is varied during the separation, the temperature in the expansion area may vary over time. To avoid the deleterious effect of such temperature variations, an ideal or desired temperature in the expansion area can be pre-determined based on the system parameters (e.g., mobile phase composition, analyte(s) of interest, etc.). For example, a separation system including an analyte of interest that is subject to degradation upon freezing or upon exposure to excess heat can have a desired temperature, or temperature range, that avoids such freezing or such exposure. In one embodiment, the desired temperature is 0°C, 1°C, 2°C, 3°C, 4°C, 5°C, 6°C, 7°C, 8°C, 9°C, 10°C, 11°C, 12°C, 13°C, 14°C, 15°C, 16°C, 17°C, 18°C, 19°C and 20°C. These temperatures can also define ranges, such as between about 0°C and 5°C, or between about 5°C and 20°C. The desired temperature or temperature range can be dependent on the system. Temperature affects such conditions as solvent condensing and separation in a GLS. High temperatures can degrade samples whereas low temperatures can cause freezing and external condensation. The desired temperature or temperature ranges can be one that eliminates or minimizes a combination of these affects.

Upon receiving the measured temperature in the expansion area, the controller can compare the temperature against the desired temperature as pre-determined to avoid or minimize any negative effects on the system, and send a signal to the heater to adjust the heat energy delivered to the mobile phase to adjust the measured temperature in the expansion area. In one embodiment, the system could be driven with a cascade control loop where the post phase change temperature feeds back to a controller that changes the heater set point temperature. The system can be designed to use the minimum heat required to maintain the desired temperature after the phase change. One intent, applicable to some embodiments, is to use as little heat as possible upstream to prevent freezing / sputtering, etc. during the phase change.

Adjustments to the solvent or mobile phase temperature can be made by the heater including cycling on and off (% duty cycle) the heating mechanism of the heater. The temperature can also be adjusted by adding a chiller or by the addition of make-up solvent or mobile phase. Make-up solvent or mobile phase can be added to the system to adjust the temperature hotter or colder. For example, make-up solvent or mobile phase can be added at or near the heater upstream of the expansion area to reduce the temperature and reduce the maximum temperature seen by the sample.

In another embodiment, the present disclosure relates to a chromatographic expansion regulation system having dual stage heating. The dual stage heating can be either before and after, before and during, or during and after the phase change. In other embodiments, the system can have multiple stage heating before, during or after the phase change. Dual and multiple stage heating provides additional controls and methods to reduce the minimum and maximum temperatures of the system. Variable heating (e.g., timing and intensity) with the multiple heaters can be designed to reduce the impact and change in temperature. A heater is in thermal communication with the column. One or more heaters may be in communication with the expansion area or the expanded mobile phase. Each heater can be capable of adjusting the column temperature, expansion area temperature or expanded mobile phase, as appropriate. Each heater can be in signal communication with the controller to adjust the column temperature, expansion area temperature or expanded mobile phase to obtain a desired temperature or temperature profile.

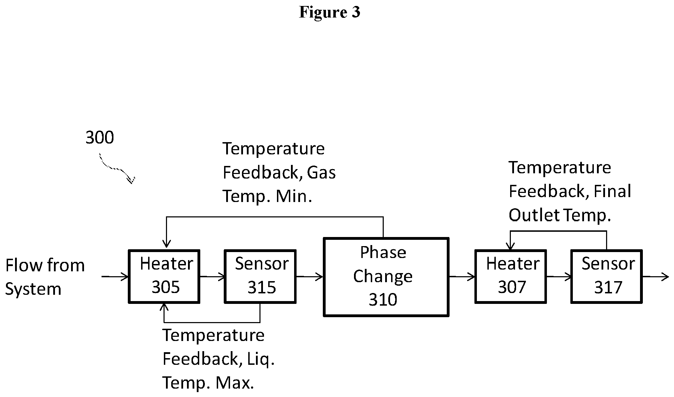

Figure 3 shows one embodiment of the chromatographic expansion regulation system (300) having dual heaters (305) and (307), an expansion area (310) where the phase change occurs, and multiple sensors (315) and (317). For example, the temperature at sensor (315) provides feedback to a controller (not shown) to control and adjust heater (305), and thus to control and adjust the temperature of the flow undergoing phase change. One benefit of this embodiment is the minimal temperatures experienced by the sample (e.g., analyte of interest) in the system. Excess heat delivered to the system can be avoided or minimized to prevent degradation of the sample associated with such excess heat.

The present disclosure also relates to a method of reducing or preventing crystallization or freezing of a mobile phase upon expansion, the method comprising the steps of measuring an expansion area temperature or an expanded mobile phase temperature of the mobile phase in an area where a substantial portion of the mobile phase expands from a liquid or supercritical form to a gas form, comparing the expansion area temperature or expanded mobile phase temperature with a desired temperature, and adjusting the temperature of the mobile phase before or during expansion to obtain the desired temperature. In one embodiment, the desired temperature is a temperature, or temperature range, that reduces or prevents at least one of crystallization or freezing of the mobile phase in the expansion area. The desired temperature is at least about 0.5°C, 1°C, 1.5°C, 2°C, 2.5°C, 3°C, 3.5°C, 4°C, 4.5°C, 5°C, 5.5°C, 6°C, 6.5°C, 7°C, 7.5°C, 8°C, 8.5°C, 9°C, 9.5°C, 10°C, 11°C, 12°C, 13°C, 14°C, 15°C, 16°C, 17°C, 18°C, 19°C and 20°C above the crystallization or freezing temperature of the mobile phase, a component therefor. These temperatures can also define ranges, such as between about 0.5°C and 20°C, or between about 1°C and 15°C. The deleterious effects that can be addressed include no or reduced flow, damage to on-line equipment, sample damage, external condensation, prevention of sample propagation, etc.

The present disclosure also relates to a method of reducing or preventing degradation of an analyte contained in a mobile phase upon expansion. The method includes the steps of measuring an expansion area temperature or an expanded mobile phase temperature of the mobile phase in an area where a substantial portion of the mobile phase expands from a liquid or supercritical form to a gas form, comparing the expansion area temperature or expanded mobile phase temperature with a desired temperature, and adjusting the temperature of the mobile phase before or during expansion to obtain the desired temperature. The desired temperature is at least about 0.5°C, 1°C, 1.5°C, 2°C, 2.5°C, 3°C, 3.5°C, 4°C, 4.5°C, 5°C, 5.5°C, 6°C, 6.5°C, 7°C, 7.5°C, 8°C, 8.5°C, 9°C, 9.5°C, 10°C, 11°C, 12°C, 13°C, 14°C, 15°C, 16°C, 17°C, 18°C, 19°C and 20°C below the degradation temperature of at least one analyte of interest. These temperatures can also define ranges, such as between about 0.5°C and 20°C, or between about 1°C and 15°C. In one embodiment, the desired temperature, or temperature range, is a temperature that reduces or prevents degradation of an analyte contained in the mobile phase.

The present disclosure also relates to a method of reducing or preventing precipitation of an analyte in a mobile phase upon expansion. The method includes the steps of measuring an expansion area temperature or an expanded mobile phase temperature of the mobile phase in an area where a substantial portion of the mobile phase expands from a liquid or supercritical form to a gas form, comparing the expansion area temperature or expanded mobile phase temperature with a desired temperature, and adjusting the temperature of the mobile phase before or during expansion to obtain the desired temperature. The desired temperature is at least about 0.5°C, 1°C, 1.5°C, 2°C, 2.5°C, 3°C, 3.5°C, 4°C, 4.5°C, 5°C, 5.5°C, 6°C, 6.5°C, 7°C, 7.5°C, 8°C, 8.5°C, 9°C, 9.5°C, 10°C, 11°C, 12°C, 13°C, 14°C, 15°C, 16°C, 17°C, 18°C, 19°C and 20°C above the temperature at which at least one analyte of interest precipitates out of the mobile phase during or related to the expansion. These temperatures can also define ranges, such as between about 0.5°C and 20°C, or between about 1°C and 15°C. In another embodiment, the desired temperature is a temperature, or temperature range, that reduces or prevents precipitation of an analyte contained in the mobile phase.

When an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

## Claims

1. A chromatographic expansion regulation system comprising:
(i) a chromatographic column having an inlet and an outlet;
(ii) a mobile phase comprising a compressed room temperature gas in substantially liquid or supercritical form flowing through the column;
(iii) at least one temperature sensor downstream of the outlet and located at or near an area where a substantial portion of the mobile phase expands from liquid or supercritical form to gas form, wherein the sensor is capable of measuring the temperature of the expanded mobile phase;
(iv) at least one heater in thermal communication with the column, wherein the heater is capable of adjusting the column temperature; and
(v) at least one temperature controller in signal communication with the sensor and the heater, wherein the controller is configured for receiving the temperature measurement from the sensor, comparing the temperature measurement with a desired temperature in the expansion area or expanded mobile phase, and sending a signal to the heater to adjust the column temperature to obtain the desired temperature.

2. The system of claim 1, wherein the chromatographic column is a preparative, analytical or micro-analytical column.

3. The system of claim 1, wherein the mobile phase comprises carbon dioxide.

4. The system of claim 3, wherein the mobile phase further comprises a modifier.

5. The system of claim 1, wherein the heater is a column heater located near the outlet.

6. The system of claim 1, wherein the heater is a located in the expansion area.

7. The system of claim 1 further comprising a gas/liquid separator, wherein the temperature sensor is part of the gas/liquid separator.

8. The system of claim 1 further comprising a gas/liquid separator, wherein the expansion area is located within the gas/liquid separator.

9. The system of claim 1, wherein the desired temperature ranges between about 0°C and 20°C.

10. The system of claim 1, wherein the desired temperature is a temperature that reduces or prevents at least one of crystallization or freezing of the mobile phase in the expansion area, a temperature that reduces or prevents degradation of an analyte contained in the mobile phase, or a temperature that reduces or prevents precipitation of an analyte or sample in the mobile phase.

11. A method of reducing freezing of a mobile phase upon expansion, or reducing degradation or precipitation of an analyte contained in a mobile phase upon expansion, the method comprising the steps of:
(i) measuring an expansion area temperature of the mobile phase in an area where a substantial portion of the mobile phase expands from a liquid form to a gas form;
(ii) comparing the expansion area temperature with a desired temperature in the expansion area; and
(iii) adjusting the temperature of the mobile phase at a chromatography column to obtain the desired temperature.

12. The method of reducing freezing of a mobile phase upon expansion, of claim 11, wherein the desired temperature is at least about 1°C above the crystallization or freezing temperature of the mobile phase.

13. The method of reducing degradation or precipitation of an analyte contained in a mobile phase upon expansion, of claim 11, wherein the desired temperature is at least about 1°C above the precipitation temperature of the analyte contained in the mobile phase.

## Patentansprüche

1. Chromatographisches Expansionsregulierungssystem, umfassend:
(i) eine chromatographische Säule mit einem Einlass und einem Auslass;
(ii) eine mobile Phase, die ein komprimiertes Gas bei Raumtemperatur in im Wesentlichen flüssiger oder überkritischer Form umfasst, das durch die Säule strömt;
(iii) mindestens einen Temperatursensor stromabwärts des Auslasses und angeordnet an oder nahe einem Bereich, wo ein wesentlicher Teil der mobilen Phase von der flüssigen oder überkritischen Form in die Gasform expandiert, wobei der Sensor in der Lage ist, die Temperatur der expandierten mobilen Phase zu messen;
(iv) mindestens eine Heizvorrichtung in thermischer Kommunikation mit der Säule, wobei die Heizvorrichtung in der Lage ist, die Säulentemperatur einzustellen; und
(v) mindestens einen Temperaturregler in Signalkommunikation mit dem Sensor und der Heizvorrichtung, wobei der Regler so konfiguriert ist, dass er die Temperaturmessung von dem Sensor empfängt, die Temperaturmessung mit einer gewünschten Temperatur im Expansionsbereich oder der expandierten mobilen Phase vergleicht und ein Signal an die Heizvorrichtung sendet, um die Säulentemperatur anzupassen, um die gewünschte Temperatur zu erhalten.

2. System nach Anspruch 1, wobei die chromatographische Säule eine präparative, analytische oder mikroanalytische Säule ist.

3. System nach Anspruch 1, wobei die mobile Phase Kohlendioxid umfasst.

4. System nach Anspruch 3, wobei die mobile Phase ferner einen Modifikator umfasst.

5. System nach Anspruch 1, wobei es sich bei der Heizvorrichtung um eine Säulenheizvorrichtung handelt, die sich in der Nähe des Auslasses befindet.

6. System nach Anspruch 1, wobei sich die Heizvorrichtung im Expansionsbereich befindet.

7. System nach Anspruch 1 ferner einen Gas-/Flüssigkeitsabscheider umfassend, wobei der Temperatursensor Teil des Gas-/Flüssigkeitsabscheiders ist.

8. System nach Anspruch 1, ferner einen Gas-/Flüssigkeitsabscheider umfassend, wobei sich der Expansionsbereich innerhalb des Gas-/Flüssigkeitsabscheiders befindet.

9. System nach Anspruch 1, wobei die gewünschte Temperatur zwischen etwa 0 °C und 20 °C liegt.

10. System nach Anspruch 1, wobei die gewünschte Temperatur eine Temperatur ist, die mindestens entweder eine Kristallisation oder ein Einfrieren der mobilen Phase im Expansionsbereich verringert oder verhindert, eine Temperatur, die den Abbau eines in der mobilen Phase enthaltenen Analyten verringert oder verhindert, oder eine Temperatur, welche die Ausfällung eines Analyten oder einer Probe in der mobilen Phase verringert oder verhindert.

11. Verfahren zum Reduzieren des Einfrierens einer mobilen Phase bei der Expansion oder zum Reduzieren des Abbaus oder der Ausfällung eines in einer mobilen Phase enthaltenen Analyten bei der Expansion, wobei das Verfahren die Schritte umfasst:
(i) Messen einer Expansionsbereichstemperatur der mobilen Phase in einem Bereich, in dem ein wesentlicher Teil der mobilen Phase von einer flüssigen in eine gasförmige Form expandiert;
(ii) Vergleichen der Expansionsbereichstemperatur mit einer gewünschten Temperatur in dem Expansionsbereich; und
(iii) Einstellen der Temperatur der mobilen Phase an einer Chromatographiesäule, um die gewünschte Temperatur zu erhalten.

12. Verfahren zur Verringerung des Einfrierens einer mobilen Phase bei der Expansion nach Anspruch 11, wobei die gewünschte Temperatur mindestens etwa 1 °C über der Kristallisations- oder Gefriertemperatur der mobilen Phase liegt.

13. Verfahren zur Verringerung des Abbaus oder der Ausfällung eines in einer mobilen Phase enthaltenen Analyten bei Expansion nach Anspruch 11, wobei die gewünschte Temperatur mindestens etwa 1 °C über der Ausfällungstemperatur des in der mobilen Phase enthaltenen Analyten liegt.

## Revendications

1. Système de régulation d'expansion chromatographique comprenant :
(i) une colonne chromatographique ayant une entrée et une sortie ;
(ii) une phase mobile comprenant un gaz comprimé à température ambiante sous forme essentiellement liquide ou supercritique circulant à travers la colonne ;
(iii) au moins un capteur de température en aval de la sortie et situé au niveau ou à proximité d'une zone où une partie importante de la phase mobile subit une expansion pour passer d'une forme liquide ou supercritique à une forme gazeuse, dans lequel le capteur est capable de mesurer la température de la phase mobile expansée ;
(iv) au moins un dispositif de chauffage en communication thermique avec la colonne, dans lequel le dispositif de chauffage est capable d'ajuster la température de la colonne ; et
(v) au moins un dispositif de commande de température en communication de signal avec le capteur et le dispositif de chauffage, dans lequel le dispositif de commande est configuré pour recevoir la mesure de température depuis le capteur, comparer la mesure de température avec une température souhaitée dans la zone d'expansion ou la phase mobile expansée, et envoyer un signal au dispositif de chauffage pour ajuster la température de la colonne afin d'obtenir la température souhaitée.

2. Système selon la revendication 1, dans lequel la colonne chromatographique est une colonne préparative, analytique ou micro-analytique.

3. Système selon la revendication 1, dans lequel la phase mobile comprend du dioxyde de carbone.

4. Système de la revendication 3, dans lequel la phase mobile comprend en outre un modificateur.

5. Système selon la revendication 1, dans lequel le dispositif de chauffage est un dispositif de chauffage de colonne situé près de la sortie.

6. Système selon la revendication 1, dans lequel le dispositif de chauffage est situé dans la zone d'expansion.

7. Système selon la revendication 1, comprenant en outre un séparateur gaz/liquide, dans lequel le capteur de température fait partie du séparateur gaz/liquide.

8. Système selon la revendication 1, comprenant en outre un séparateur gaz/liquide, dans lequel la zone d'expansion est située à l'intérieur du séparateur gaz/liquide.

9. Système selon la revendication 1, dans lequel la température souhaitée est comprise entre environ 0 °C et 20 °C.

10. Système selon la revendication 1, dans lequel la température souhaitée est une température qui réduit ou empêche au moins l'une parmi cristallisation ou congélation de la phase mobile dans la zone d'expansion, une température qui réduit ou empêche une dégradation d'un analyte contenu dans la phase mobile, ou une température qui réduit ou empêche une précipitation d'un analyte ou d'un échantillon dans la phase mobile.

11. Procédé de réduction de la congélation d'une phase mobile lors de l'expansion, ou de réduction de la dégradation ou de la précipitation d'un analyte contenu dans une phase mobile lors de l'expansion, le procédé comprenant les étapes consistant à :
(i) mesurer une température de la zone d'expansion de la phase mobile dans une zone où une partie importante de la phase mobile subit une expansion pour passer d'une forme liquide à une forme gazeuse ;
(ii) comparer la température de la zone d'expansion à une température souhaitée dans la zone d'expansion ; et
(iii) ajuster la température de la phase mobile au niveau d'une colonne chromatographique pour obtenir la température souhaitée.

12. Procédé de réduction de la congélation d'une phase mobile lors de l'expansion, selon la revendication 11, dans lequel la température souhaitée est supérieure d'au moins environ 1 °C à la température de cristallisation ou de congélation de la phase mobile.

13. Procédé de réduction de la dégradation ou de la précipitation d'un analyte contenu dans une phase mobile lors de l'expansion, selon la revendication 11, dans lequel la température souhaitée est supérieure d'au moins environ 1 °C à la température de précipitation de l'analyte contenu dans la phase mobile.
